(19) **Europäisches Patentamt**

**European Patent Office**

**Office européen des brevets**

(11) **EP 1 457 771 A2**

(12) **EUROPEAN PATENT APPLICATION**

(43) Date of publication:
**15.09.2004 Bulletin 2004/38**

(51) Int Cl.$^7$: **G01N 25/54**

(21) Application number: **04003542.0**

(22) Date of filing: **17.02.2004**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• **Teraji, Atsushi**<br>  **Yokohama-shi Kanagawa 232-0063 (JP)**<br>• **Tsuda, Tsuyoshi**<br>  **Yokosuka-shi Kanagawa 238-0056 (JP)**<br>• **Noda, Toru**<br>  **Yokohama-shi Kanagawa 244-0842 (JP)** |
| (30) Priority: **12.03.2003 JP 2003066547** | |
| (71) Applicant: **Nissan Motor Co., Ltd.**<br>**Yokohama-shi, Kanagawa 221-0023 (JP)** | (74) Representative: **Grünecker, Kinkeldey,**<br>**Stockmair & Schwanhäusser Anwaltssozietät**<br>**Maximilianstrasse 58**<br>**80538 München (DE)** |

(54) **Flame propagation modeling method**

(57)     A flame propagation modeling method is provided to accommodate a variety of combustion modes. The flame propagation modeling method defines a flame surface area density to be the flame surface per unit volume and models the flame propagation based on the fact that the progress of the flame transports, generates, and diffuses the flame surface area density. The generation of the flame surface area density, which expresses the progress of the flame, is expressed as flame growth resulting from turbulent combustion and as flame growth resulting from laminar combustion. The flame growth resulting from turbulent combustion is inversely proportional to the chemical reaction characteristic time and is a function of a turbulent Reynolds number. The flame growth resulting from laminar combustion is proportional to both the laminar flame speed and to the ratio of the temperature of a burned portion to the temperature of an unburned portion and is a function of the Karlowitz number.

FLAME SURFACE

CONVERT TO DENSITY BY FINDING
FLAME SURFACE AREA PER UNIT VOLUME

**Fig. 1**

EP 1 457 771 A2

**Description**

BACKGROUND OF THE INVENTION

Field of the Invention

The present invention relates to a flame propagation modeling method. Background Information

One example of a flame propagation modeling method is described in an article *"A Comparison of Flamelet Models for Premixed Turbulent Combustion"* that was presented in *Combustion and Flame* 95: 101 - 117 (1993). In this article, flame surface area density is defined as the flame surface per unit volume and serves as a method of modeling the flame propagation based on the fact that the flame progression transports, generates, and diffuses the flame surface area density. The flame propagation is estimated by modeling the flame generation in such a manner that the flame generation resulting from turbulent flow is inversely proportional to the chemical reaction characteristic time and proportional to the flame stretch rate.

In view of the above, it will be apparent to those skilled in the art from this disclosure that there exists a need for an improved flame propagation modeling method. This invention addresses this need in the art as well as other needs, which will become apparent to those skilled in the art from this disclosure.

SUMMARY OF THE INVENTION

It has been discovered that with the aforementioned method, when the turbulence is small, the chemical reaction characteristic time becomes very large and the flame propagation is not reproduced. As a result, the flame propagation cannot be accurately predicted.

Also, when the combustions of fields having different combustion modes are to be reproduced, it is necessary to multiply the flame generation corresponding to each combustion mode by a constant in order to adjust according to experimental values.

In view of these issues, the object of the present invention is to provide a flame propagation modeling method that can accommodate a variety of combustion modes.

Accordingly, in accordance with one aspect of the present invention, a method of modeling flame propagation is provided that comprises defining a flame surface area density of a flame as a flame surface area per unit volume of the flame; expressing flame progress as generation of the flame surface area density in terms of at least one of a turbulent combustion and a laminar combustion; determining flame growth resulting from turbulent combustion as being inversely proportional to a chemical reaction characteristic time and as a function of a turbulent Reynolds number; and modeling the flame propagation based on the flame growth.

Accordingly, in accordance with one aspect of the present invention, a method of modeling flame propagation is provided that comprises defining a flame surface area density of a flame as a flame surface area per unit volume of the flame; expressing flame progress as generation of the flame surface area density in terms of at least one of a turbulent combustion and a laminar combustion; determining the flame growth resulting from laminar combustion as being proportional to both a laminar flame speed and to a ratio of a temperature of a burned portion to a temperature of an unburned portion and as a function of the Karlowitz number; and modeling the flame propagation based on the flame growth.

These and other objects, features, aspects and advantages of the present invention will become apparent to those skilled in the art from the following detailed description, which, taken in conjunction with the annexed drawings, discloses a preferred embodiment of the present invention.

BRIEF DESCRIPTION OF THE DRAWINGS

Referring now to the attached drawings which form a part of this original disclosure:

Figure 1 is a simplified diagram that illustrates a basic concept of flame surface area density that is used in a flame propagation modeling method in accordance with the present invention;

Figure 2 is a graph that illustrates a basic concept of flame growth during an initial stage of combustion that is used in a flame propagation modeling method in accordance with the present invention;

Figure 3 is a graph that illustrates calculated values and experimental values of the pressure and heat generation in accordance with the present invention;

Figure 4 is a diagram that illustrates a distribution of the flame surface area density;

Figure 5 is a flowchart of an analysis performed when the combustions of fields having different combustion modes are reproduced in accordance with the present invention; and

Figure 6 is a flowchart describing the setting of the analysis conditions in accordance with the present invention.

## DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

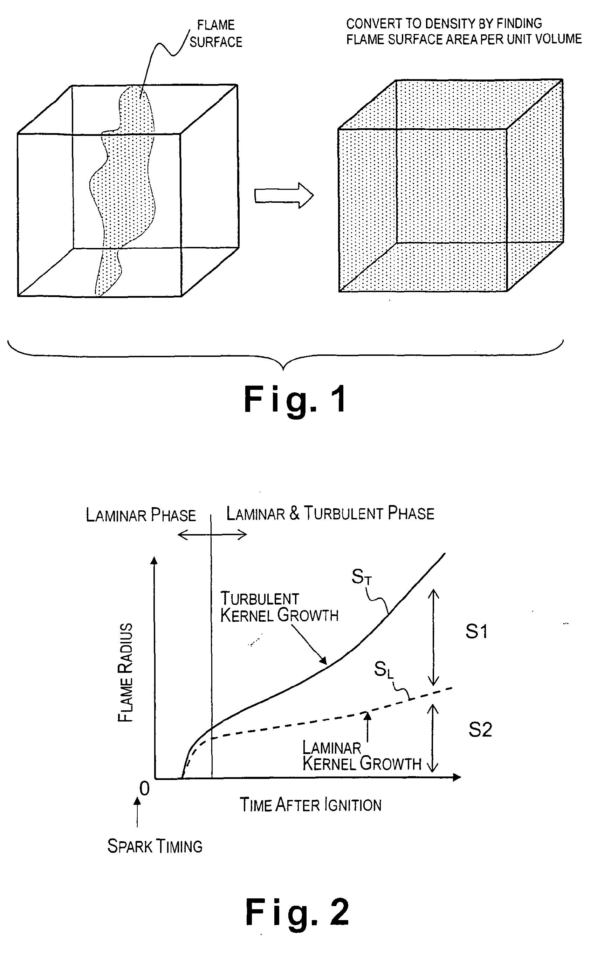

Referring initially to Figure 1, a simplified illustration is shown to illustrate a basic concept of flame surface area density that is used in a flame propagation modeling method in accordance with the present invention. Since the actual flame is extremely thin, it is necessary to generate a calculation grid smaller than the flame band thickness in order to obtain a precise calculation. When such calculation grids are applied to an engine or a combustor, the number of calculation grids becomes enormous and the calculation cost becomes very expensive. By considering the flame surface area per unit volume, as shown in the Figure 1, it is possible to calculate the flame propagation precisely even when the calculation grid is larger than the flame band thickness.

Referring to Figure 2, a graph illustrates the basic concept of the flame growth during the initial stage of combustion that is used in the flame propagation modeling method in accordance with the present invention. The horizontal axis indicates the amount of time that has elapsed since ignition (time after ignition) and the vertical axis indicates the flame radius. In Figure 2, the solid line $S_T$ is the flame growth resulting from turbulent combustion and the broken line $S_L$ is the flame growth resulting from laminar combustion.

After combustion begins, the combustion first starts as a laminar flame. Then, turbulent combustion is gradually generated and eventually the turbulent combustion becomes large enough to ignore the laminar flame (e.g., when S1 > S2). The growth of the flame is expressed by expressing the generation of the flame surface area density $\Sigma$ in terms of the growth of the turbulent flame and the laminar flame. The generation of the flame surface area density $\Sigma$ is expressed by combining the growth resulting from the two modes of combustion, i.e., the turbulent combustion flame growth $S_T$ and the laminar combustion flame growth $S_L$.

The turbulent combustion flame growth $S_T$ is inversely proportional to the chemical reaction characteristic time and a function of the turbulent Reynolds number. Thus, the turbulent combustion flame growth $S_T$ is expressed according to Equation 1 as follows:

$$S_T = \alpha_1 (Re_t)^{\alpha 2}\ \Gamma\ \frac{\varepsilon}{\kappa}\ \Sigma \tag{1}$$

where

$S_T$ represents flame growth resulting from turbulent combustion,
$\Sigma$ represents flame surface area density, $k$ represents turbulence strength,
$\varepsilon$ represents turbulence dissipation rate, $Re_t$ represents turbulent Reynolds
number, $\Gamma$ represents flame stretch rate, and $\alpha_1$ and $\alpha_2$ are model constants.

The laminar combustion flame growth $S_L$ is proportional to both the laminar flame speed $U_L$ and to the ratio of the temperature of a burned portion to the temperature of an unburned portion ($T_b/T_u$) and is a function of the Karlowitz number. Thus, the laminar combustion flame growth $S_L$ is expressed according to Equation 2 as follows:

$$SL = \beta_1\ \exp(\ -\beta_2 K\alpha)\ \frac{T_b}{T_u}\ U_L\ \Sigma^2\ , \tag{2}$$

where

$S_L$ represents flame growth resulting from laminar combustion,
$\Sigma$ represents flame surface area density, $U_L$ represents laminar flame speed,
$T_b$ represents burned gas temperature, $T_u$ represents unburned gas temperature, $K\alpha$ represents Karlowitz number,
and $\beta_1$ and $\beta_2$ are model constants.

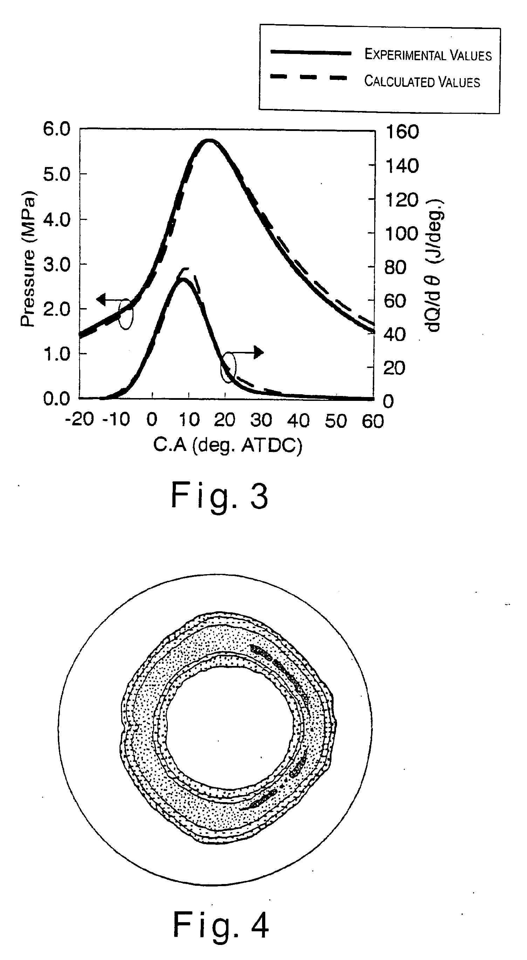

Referring to Figure 3, a graph illustrates an example of an analysis using the flame propagation prediction model of the present invention. The horizontal axis indicates the crank angle after top dead center (degrees ATDC) and the vertical axis indicates the pressure (MPa) and the heat generation ($dQ/d\theta$). Both calculated values and experimental values are shown in Figure 3. Thus, it will be apparent to those skilled in the art from this disclosure that the flame propagation prediction model of the present invention can be used to optimize combustion in an internal combustion engine.

Referring now to Figure 4, the distribution of the flame surface area density $\Sigma$ is obtained from the example of the analysis of Figure 3 using the flame propagation prediction model of the present invention. The best result is obtained when the value of $\alpha_2$ in Equation 3 (as seen below) is 0.5 so that the square root of the turbulent Reynolds number is used.

$$\frac{\partial \Sigma}{\partial t} + \frac{\partial u_i \Sigma}{\partial x_i} = \frac{\partial}{\partial x_i}\left(\frac{v_t}{\sigma_c}\frac{\partial \Sigma}{\partial x_i}\right) + \alpha_1 (Re_t)^{\alpha_2} \, \Gamma \, \frac{\varepsilon}{\kappa}\Sigma + \beta_1 \, exp(-\beta_2 Ka) \, \frac{T_b}{T_u} U_L \, \Sigma^2 - D \quad (3)$$

where

$\Sigma$ represents flame surface area density, $k$ represents turbulence strength,
$\varepsilon$ represents turbulence dissipation rate, $Re_t$ represents turbulent Reynolds number, $\Gamma$ represents flame stretch rate, $U_L$ represents laminar flame speed,
$T_b$ represents burned gas temperature, $T_u$ represents unburned gas temperature, K$\alpha$ represents Karlowitz number, $v_t$ represents turbulent kinematic viscosity, $\sigma_c$ represents turbulent Schmidt number,
$D$ represents air resistance force, and $\alpha_1$, $\alpha_2$, $\beta_1$ and $\beta_2$ are model constants.

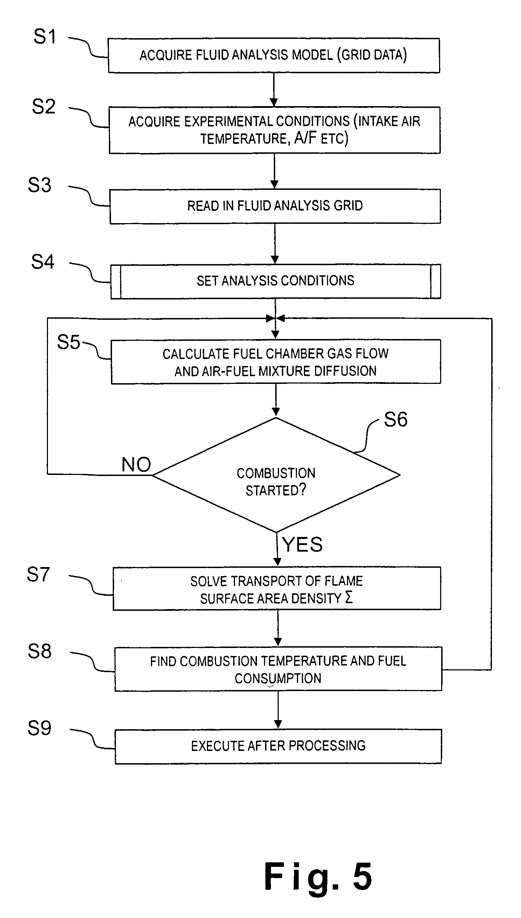

Figure 5 shows a flowchart of the analysis performed when the combustions of fields having different combustion modes are reproduced.

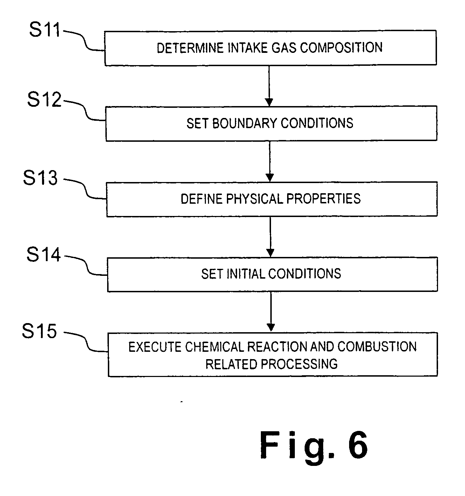

In step S1, the fluid analysis model (grid data) is acquired. In step S2, the experimental conditions (intake air temperature, air-fuel ratio, etc.) are acquired.
In step S3, the fluid analysis grid is read in. In step S4, the analysis conditions are set according to the flowchart of Figure 6 (discussed later).

With these steps, a calculation analysis grid is generated based on the analysis model and the ignition timing and initial analysis conditions which are set based on experimental values and other simulations. When the device being analyzed is an engine, the operation profiles of the intake valves and exhaust valves and the behavior profile of the pistons are set.

The analysis condition setting flowchart of Figure 6 will now be described. The following processing operations are executed in steps S11 to S15: setting the intake gas composition, setting the boundary conditions, defining the physical properties, setting the initial conditions, and chemical reaction and combustion related processing.

Returning to Figure 5, in step S5, based on the set initial values, the transport and diffusion of the gas flow and fuel inside the combustion chamber of the engine or combustor are calculated along with the fuel spray. The transport and diffusion of the gas flow and fuel are calculated by using such methods as calculus of finite differences, finite element analysis, and finite volume analysis and discretizing the fluid equations. The turbulent flow is calculated using any of various turbulence models, such as direct numerical calculation, large eddy simulation, or a k-$\varepsilon$ model. In addition to solving the gas flow with good precision, the turbulence strength k, the turbulence dissipation rate $\varepsilon$, the turbulent Reynolds number Ret, and the Karlowitz number Ka are calculated.

The laminar flame speed $U_L$ used is a value obtained experimentally or from a database or a value calculated using any of various laminar flame speed models developed by such persons as Keck and Gulder or a detailed chemical reaction model.

In step S6, it is determined if combustion has begun, i.e., if the ignition timing set in step S4 has passed. If it is determined that combustion has begun, control proceeds to step S7. Meanwhile, if it is determined that combustion has not begun, control returns to step S5.

In step S7, the transport of the flame surface area density $\Sigma$ is calculated based on the aforementioned Equation 3 or the following Equation 4.

$$\frac{\partial \Sigma}{\partial t} + \frac{\partial u_i \Sigma}{\partial x_i} = \frac{\partial}{\partial x_i}\left(\frac{v_t}{\sigma_c}\frac{\partial \Sigma}{\partial x_i}\right) + f(Re_t) \, \Gamma \, \frac{\varepsilon}{\kappa}\Sigma + f(Ka) \, \frac{T_b}{T_u} U_L \, \Sigma^2 - D \quad (4)$$

where

$\Sigma$ represents flame surface area density, $\kappa$ represents turbulence strength,
$\varepsilon$ represents turbulence dissipation rate, $Re_t$ represents turbulent Reynolds number, $\Gamma$ represents flame stretch rate, $U_L$ represents laminar flame speed,
$T_b$ represents burned gas temperature, $T_u$ represents unburned gas temperature, $K\alpha$ represents Karlowitz number,
$v_1$ represents turbulent kinematic viscosity, $\sigma_c$ represents turbulent Schmidt number,
$D$ represents air resistance force.

Similarly to the gas flow, Equation 3 or 4 is solved by using such methods as calculus of finite differences, finite element analysis, and finite volume analysis to discretizing the fluid equations.

The flame stretch rate $\Gamma$ is a coefficient expressing the stretch and quench of the flame and, here, it is determined using the ITNFS (intermittent turbulence net flame stretch) model. This model is a function of the ratio between the integral length scale developed by Poinsot et al and the flame band thickness and the ratio between the turbulence strength and the laminar combustion speed. It is a function that is formulated using a direct numerical simulation of the interaction between the flame and eddies, and experimental data related to intermittent turbulence and serves to provide the net flame spread. Also, the resistance force D that air exerts on the flame (flame resistance force) is found using Equation 5, which was developed by Poinsot et al.

$$D = \gamma \frac{U_L + Ck^{\frac{1}{2}}}{Y_F/Y_{FV}} \Sigma^2 \tag{5}$$

where

$Y_F$ represents fuel mass fraction, and $k$ represents turbulence strength, and
$Y_{FV}$ represents unburned fuel mass fraction.

The size of the initial flame surface area density $\Sigma$ at the time of ignition is based on a predetermined flame kernel size and can be determined with Equation 6 using the fuel consumption mass $m_F$ during ignition. It is also acceptable to determine the flame kernel using an ignition model based on the air-fuel ratio, turbulence strength, etc.

$$\omega_{Fchem} = m_F \, U_L \Sigma \tag{6}$$

where $\omega_{Fchem}$ represents fuel consumption rate, and $m_F$ represents fuel mass.

In step S8, the ratio of the temperature of the burned portion to the temperature of the unburned portion ($T_b/T_u$) and the fuel consumption mass are found. Then, the field fuel consumption rate $\omega_{Fchem}$ is found with Equation 6 using the transport of the flame surface area density $\Sigma$ and the transport and diffusion of fuel are discretized and solved using Equation 7 as follows.

$$\frac{\partial Y_F}{\partial t} + \frac{\partial u_i Y_F}{\partial x_i} = \frac{\partial}{\partial x_i}\left(\frac{v_t}{\sigma_c}\frac{\partial Y_F}{\partial x_i}\right) + \omega_{Fchem} + \omega_{Fevap} \tag{7}$$

where $(J)_{Fevap}$ represents the increase resulting from vaporization of fuel mist.

In step S9 after-processing is executed. The flame propagation inside the combustion chamber is predicted by executing steps S5 to S9 over a predetermined cycle time and number of steps.

According to the present invention, the generation of the flame surface area density $\Sigma$, which expresses the progress of the flame, is expressed with two modes, namely, the flame growth $S_T$ resulting from turbulent combustion and the flame growth $S_L$ resulting from laminar combustion, and the flame growth $S_T$ resulting from turbulent combustion is inversely proportional to chemical reaction characteristic time and a function of the turbulent Reynolds number. Consequently, the turbulent flame resulting from turbulent combustion is strongly dominated by turbulent mixing and the combustion reaction proceeds in conjunction with the turbulent mixing. Since the turbulent mixing has a strong correlation with the turbulent Reynolds number, the flame propagation in various fields of strong turbulence can be predicted by expressing the flame growth resulting from turbulent combustion as a function of the turbulent Reynolds number.

Also according to the present invention, the generation of the flame surface area density $\Sigma$, which expresses

the progress of the flame, is expressed with two modes, namely, the flame growth $S_T$ resulting from turbulent combustion and the flame growth $S_L$ resulting from laminar combustion, and the flame growth $S_L$ resulting from laminar combustion is expressed based on the fact that it is proportional to both the laminar flame speed $U_L$ and the ratio of the temperature of a burned portion to the temperature of an unburned portion ($T_b/T_u$) and is a function of the Karlowitz number (exp (- β2$K\alpha$)). Consequently, laminar combustion is assumed to be reasonably free of disturbances such that the combustion process is dominated by chemical reactions. Since the laminar combustion mode is characterized by the Karlowitz number, which is the ratio of the Kolmogorov time scale to the chemical reaction characteristic time, the flame propagation in various fields of weak turbulence can be predicted by expressing the flame growth as a function of the Karlowitz number.

Also according to the present invention, the generation of the flame surface area density Σ, which expresses the generation of the flame, is expressed as a combination of the turbulent combustion and the laminar combustion. Since the flame generation is expressed by combining the turbulent flame generation (which is expressed as a function of the turbulent Reynolds number) and the laminar flame generation (which is expressed as a function of the Karlowitz number), the flame propagation can be predicted even for combustion modes that are dominated by both laminar combustion and turbulent combustion. It is also possible to predict the flame propagation at fields where at the beginning of combustion the turbulence is very weak and laminar combustion dominates due to a very small Reynolds number, but eventually the turbulence generated by the combustion causes the turbulent Reynolds number to become large, strengthening the turbulent combustion.

Also according to the present invention, the flame growth $S_T$ resulting from the turbulent combustion is found based on the fact that it is inversely proportional to the chemical reaction characteristic time and proportional to both the turbulent Reynolds number raised to an exponential power ($Re_t\alpha^2$) and the stretch rate $\Gamma$ of the flame. Consequently, the turbulent flame is even more strongly dominated by turbulent mixing and the combustion reaction proceeds in conjunction with the turbulent mixing. Since the turbulent mixing has a strong correlation with the turbulent Reynolds number, a situation in which the flame speed increases as the turbulence of the field strengthens can be reproduced and the flame propagation in various fields of strong turbulence can be predicted by expressing the flame growth $S_T$ resulting from turbulent combustion as the turbulent Reynolds number raised to an exponential power ($Re_t^{\alpha 2}$).

Also according to the present invention, the transport of the flame surface area density, which expresses the generation of the flame, is expressed in two modes, namely, the flame growth $S_T$ resulting from turbulent combustion and flame growth $S_L$ resulting from laminar combustion, and the flame growth $S_L$ resulting from laminar combustion is expressed based on the fact that it is proportional to the laminar flame speed $U_L$, to the ratio of the temperature of a burned portion to the temperature of an unburned portion ($T_b/T_u$), and to an exponential function of the Karlowitz number (exp (-β$_2$ $K\alpha$)). Consequently, by expressing the generation of the laminar combustion as an exponential function of the Karlowitz number (exp(-β$_2$ $K\alpha$)), it is possible to make the generation of laminar combustion large when the turbulence of the field is small and small when the turbulence of the field is large, it is possible to reproduce the flame growth $S_L$ resulting from laminar combustion and reproduce quenching, and the flame propagation in various fields of weak turbulence can be predicted.

Also according to the present invention, the exponential function (exp(- β2 $K\alpha$)) is the base of the natural logarithm raised to the power of the Karlowitz number (-β$_2$ $K\alpha$). Consequently, the flame growth $S_L$ resulting from laminar combustion and quenching can be reproduced more precisely and the flame propagation in various fields of weak turbulence can be predicted.

Also according to the present invention, the flame growth $S_T$ resulting from turbulent combustion is expressed according to Equation 1. Consequently, it is possible to reproduce a situation in which the flame speed increases as the turbulence of the field strengthens and the flame propagation in various fields of weak turbulence can be predicted.

Also according to the present invention, the flame growth resulting from laminar combustion is expressed according to Equation 2. Consequently, it is possible to make the generation of laminar combustion small when the turbulence of the field is large, it is possible to reproduce the flame growth $S_L$ resulting from laminar combustion and reproduce quenching, and the flame propagation in various fields of weak turbulence can be predicted.

Also according to the present invention, the transport of the flame surface area density Σ, which expresses the generation of the flame, is expressed with two modes, namely, the flame growth $S_T$ resulting from turbulent combustion and the flame growth $S_L$ resulting from laminar combustion, and the generation of the flame is suppressed by a resistance force $D$ imposed by air. As a result, by expressing the generation of the flame such that it is suppressed by a resistance force $D$ imposed by air, the effect of the air resistance $D$ on the flame can be reproduced and the flame propagation can be predicted with good precision with respect to combustion modes that are dominated by both laminar combustion and turbulent combustion.

Also according to the present invention, the transport, generation, and diffusion of the flame surface area density are expressed according to Equation 3. Consequently, the generation of turbulent combustion and laminar combustion and the resistance $D$ imposed on the flame by air can be expressed and the flame propagation can be predicted with good accuracy with respect to combustion modes that are dominated by both laminar combustion and turbulent combustion.

Moreover, terms that are expressed as "means-plus function" in the claims should include any structure that can be utilized to carry out the function of that part of the present invention. The terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

This application claims priority to Japanese Patent Application No. 2003-066547. The entire disclosure of Japanese Patent Application No. 2003-066547 is hereby incorporated herein by reference.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents. Thus, the scope of the invention is not limited to the disclosed embodiments.

**Claims**

1. A method of modeling flame propagation comprising:

   defining a flame surface area density of a flame as a flame surface area per unit volume of the flame;
   expressing flame progress as generation of the flame surface area density in terms of at least one of a turbulent combustion and a laminar combustion;
   determining flame growth resulting from turbulent combustion as being inversely proportional to a chemical reaction characteristic time and as a function of a turbulent Reynolds number; and
   modeling the flame propagation based on the flame growth.

2. A method of modeling flame propagation comprising:

   defining a flame surface area density of a flame as a flame surface area per unit volume of the flame;
   expressing flame progress as generation of the flame surface area density in terms of at least one of a turbulent combustion and a laminar combustion;
   determining flame growth resulting from laminar combustion as being proportional to both a laminar flame speed and to a ratio of a temperature of a burned portion to a temperature of an unburned portion and as a function of the Karlowitz number; and
   modeling the flame propagation based on the flame growth.

3. The flame propagation modeling method as recited in claim 1 or 2, wherein
   the generation of the flame surface area density is expressed as a combination of the turbulent combustion and the laminar combustion.

4. The flame propagation modeling method as recited in any one of claims 1 to 3, wherein
   the flame growth resulting from the turbulent combustion is calculated based on the flame growth being inversely proportional to the chemical reaction characteristic time and proportional to both the turbulent Reynolds number raised to an exponential power and a stretch rate of the flame.

5. The flame propagation modeling method as recited in any one of claims 1 to 3, wherein
   the flame generation is further expressed as transport of the flame surface area density, which is expressed in terms of flame growth resulting from turbulent combustion and flame growth resulting from laminar combustion; and
   the flame growth resulting from laminar combustion being expressed as proportional to the laminar flame speed, to the ratio of the temperature of a burned portion to the temperature of an unburned portion, and to an exponential function of the Karlowitz number.

6. The flame propagation modeling method as recited in claim 5, wherein
   the exponential function of the Karlowitz number is the base of the natural logarithm raised to the power of the Karlowitz number.

7. The flame propagation modeling method as recited in claim 1, wherein
the flame growth resulting from the turbulent combustion is expressed as follows:

$$S_T = \alpha_1 (Re_t)^{\alpha^2} \Gamma \frac{\varepsilon}{\kappa} \Sigma,$$

where $S_T$ represents flame growth resulting from turbulent combustion,
$\Sigma$ represents flame surface area density, $k$ represents turbulence strength,
$\varepsilon$ represents turbulence dissipation rate, $Re_t$ represents turbulent Reynolds number, $\Gamma$ represents flame stretch rate, and $\alpha_1$ and $\alpha_2$ are model constants.

8. The flame propagation modeling method as recited in claim 2, wherein
the flame growth resulting from the laminar combustion is expressed as follows:

$$S_L = \beta_1 \, exp(-\beta_2 K\alpha) \frac{T_b}{T_u} U_L \Sigma^2,$$

where

$S_L$ flame growth resulting from laminar combustion,
$\Sigma$ represents flame surface area density, $U_L$ represents laminar flame speed,
$T_b$ represents burned gas temperature, $T_u$ represents unburned gas temperature, $K\alpha$ represents Karlowitz number, and $\beta_1$ and $\beta_2$ are model constants.

9. The flame propagation modeling method as recited in any one of claims 1 to 8, wherein
the flame generation is further expressed as transport of the flame surface area density, which is expressed in terms of flame growth resulting from turbulent combustion and flame growth resulting from laminar combustion; and
the flame generation is suppressed by a resistance force imposed by air.

10. The flame propagation modeling method as recited in any one of claims 1 to 9, wherein
transport, generation, and diffusion of the flame surface area density are expressed as follows:

$$\frac{\partial \Sigma}{\partial t} + \frac{\partial u_i \Sigma}{\partial x_i} = \frac{\partial}{\partial x_i}\left(\frac{v_t}{\sigma_c}\frac{\partial \Sigma}{\partial x_i}\right) + \alpha_1 (Re_t)^{\alpha_2} \Gamma \frac{\varepsilon}{\kappa}\Sigma + \beta_1 \, exp(-\beta_2 Ka)\frac{T_b}{T_u} U_L \Sigma^2 - D,$$

where $\Sigma$ represents flame surface area density, $k$ represents turbulence strength, $\varepsilon$ represents turbulence dissipation rate, $Re_t$, represents turbulent Reynolds number, $\Gamma$ represents flame stretch rate, $U_L$ represents laminar flame speed, $T_b$ represents burned gas temperature, $T_u$ represents unburned gas temperature, $K\alpha$ represents Karlowitz number, $v_t$ represents turbulent kinematic viscosity, $\sigma_c$ represents turbulent Schmidt number, D represents air resistance force, and $\alpha_1$, $\alpha_2$, $\beta_1$ and $\beta_2$ are model constants.

FLAME
SURFACE

CONVERT TO DENSITY BY FINDING
FLAME SURFACE AREA PER UNIT VOLUME

# Fig. 1

LAMINAR PHASE | LAMINAR & TURBULENT PHASE

$S_T$

TURBULENT
KERNEL GROWTH

S1

$S_L$

FLAME RADIUS

LAMINAR
KERNEL GROWTH

S2

0

TIME AFTER IGNITION

SPARK TIMING

# Fig. 2

Fig. 3

Fig. 4

S1 — ACQUIRE FLUID ANALYSIS MODEL (GRID DATA)

S2 — ACQUIRE EXPERIMENTAL CONDITIONS (INTAKE AIR TEMPERATURE, A/F ETC)

S3 — READ IN FLUID ANALYSIS GRID

S4 — SET ANALYSIS CONDITIONS

S5 — CALCULATE FUEL CHAMBER GAS FLOW AND AIR-FUEL MIXTURE DIFFUSION

S6 — COMBUSTION STARTED?

NO

YES

S7 — SOLVE TRANSPORT OF FLAME SURFACE AREA DENSITY $\Sigma$

S8 — FIND COMBUSTION TEMPERATURE AND FUEL CONSUMPTION

S9 — EXECUTE AFTER PROCESSING

# Fig. 5

S11 — DETERMINE INTAKE GAS COMPOSITION

S12 — SET BOUNDARY CONDITIONS

S13 — DEFINE PHYSICAL PROPERTIES

S14 — SET INITIAL CONDITIONS

S15 — EXECUTE CHEMICAL REACTION AND COMBUSTION RELATED PROCESSING

# Fig. 6